# EUROPÄISCHE PATENTSCHRIFT

(11) **EP 2 495 116 B1**
(45) Veröffentlichungstag und Bekanntmachung des Hinweises auf die Patenterteilung: **18.04.2018**
(21) Anmeldenummer: 12156618.6
(22) Anmeldetag: 23.02.2012
(51) Int. Cl.: B60G 7/02, B62D 17/00

(54) **Stütze zur schwenkbaren Lagerung des Achslenkers einer Fahrzeugachse**
Support for pivotable mounting of the axle guide of a vehicle axle
Support de montage oscillant du guide d'essieu d'un axe de véhicule

(30) Priorität: 01.03.2011 DE 102011000981
(43) Veröffentlichungstag der Anmeldung: 05.09.2012
(73) Patentinhaber: BPW Bergische Achsen KG, 51674 Wiehl (DE)
(72) Erfinder: Biegale, Achim, 51588 Nümbrecht (DE); Gmeiner, Swen, 51709 Marienheide (DE); Michels, Manfred, 51067 Köln (DE)
(74) Vertreter: Bungartz Christophersen Partnerschaft mbB Patentanwälte

(56) Entgegenhaltungen:
- EP-A1- 0 504 593
- DE-A1- 3 336 922
- DE-U1- 20 104 753
- GB-A- 2 257 670
- US-A- 5 775 719
- US-A1- 2007 126 263

## Beschreibung

Die Erfindung betrifft eine Stütze zur schwenkbaren Lagerung des Achslenkers einer Fahrzeugachse, mit einem Grundkörper aus zwei über eine Stirnwand miteinander verbundenen Seitenwänden, die jeweils mit einer Öffnung für einen die Schwenkachse bildenden, quer durch die Seitenwände und den dazwischen einsetzbaren Achslenker hindurchführenden Bolzen versehen sind, und mit an beiden Seitenwänden angeordneten Justiervorrichtungen zur stufenlosen Einstellung der Bolzenposition, wobei jede Justiervorrichtung eine Geradführung aufweist, deren führendes Element starr an der Seitenwand angeordnet ist und deren daran geführtes Element eine Platte ist, die mit einem schräg zu der Geradführung verlaufenden Langloch versehen ist, durch das der Bolzen quer hindurchführt.

Eine Stütze zur schwenkbaren Lagerung eines Achslenkers mit diesen Merkmalen ist aus der DE 201 04 753 U1 bekannt. Zur Einstellung der Bolzenposition in Fahrzeuglängsrichtung ist die Stütze an beiden Seiten mit Justiervorrichtungen versehen. Diese sind jeweils als Geradführung mit einem führenden, und einem geführten Element ausgestaltet. Das führende Element ist eine in der jeweiligen Seitenwand der Stütze befestigte Kulisse, wohingegen das geführte Element eine Platte ist, die mit einem schräg zu der Geradführung verlaufenden Langloch versehen ist, durch welches hindurch der Bolzen führt. Durch Verschieben der Platte längs der Geradführung, etwa durch Schläge mit einem Hammer, verschiebt sich der Bolzen quer hierzu, wodurch auch der jeweilige Achslenker in Fahrzeuglängsrichtung verstellt wird. Auf diese Weise lässt sich die Spur der Fahrzeugachse individuell einstellen. Zusätzlich verhindert die Schrägstellung des in der Platte ausgebildeten Langlochs eine unbeabsichtigte Verstellung bei Zug oder Druck auf den Achslenker.

Zur Realisierung der Geradführung sind in die beiden Seitenwände des Stützengrundkörpers jeweils Buchsen eingesetzt, und darin fest verankert. An den Buchsen sind jeweils zwei zueinander parallele und aufeinander zu weisende Vorsprünge ausgebildet, die gemeinsam die Kulisse bilden, also das führende Element der Geradführung. Diese Lösung nach der DE 201 04 753 U1 ist zwar in der Funktion überzeugend, erfordert jedoch zusätzliche Einzelteile und Montageschritte bei der Herstellung der Stütze.

Der Erfindung liegt die Aufgabe zugrunde, eine Stütze zur schwenkbaren Lagerung des Achslenkers einer Fahrzeugachse zu schaffen, die eine Justierung des den Achslenker schwenkbar haltenden Bolzens ermöglicht, jedoch, insbesondere bei Großserienfertigung, einfach herstellbar ist.

Zur Lösung dieser Aufgabe wird bei einer Stütze mit den eingangs angegebenen Merkmalen vorgeschlagen, dass das führende Element der Geradführung einstückig an der jeweiligen Seitenwand angeformt ist, indem der Grundkörper der Stütze als Blechformteil ausgebildet ist und bei der das führende Element der Geradführung in einer partiellen Materialverformung des Blechmaterials der jeweiligen Seitenwand besteht.

Bei der solcherart ausgebildeten Stütze erfolgt das Anformen des führenden Elements der Geradführung bereits mit der Herstellung des Stützengrundkörpers, d. h. in einem einzigen Fertigungsschritt erhält die Stütze ihre Grundform, zugleich wird das eine Element der Geradführung mit hergestellt. Dies ermöglicht insbesondere bei Großserien eine preiswerte Fertigung frei von zusätzlichen Montageschritten am Grundkörper der Stütze. Durch die partielle Materialverformung wird also das eine Element der Geradführung, nämlich das führende Element, gestaltet. Dieser Fertigungsschritt kann gemeinsam mit der Verformung des Stützengrundkörpers erfolgen, d. h. in einem einzigen Fertigungsschritt erhält der z.B. aus einem Stahlblech bestehende Stützengrundkörper seine Grundform, zugleich wird durch partielle Materialverformung das eine Element der Geradführung hergestellt. Wiederum wird insbesondere bei Großserien eine preiswerte Fertigung frei von zusätzlichen Montageschritten am Grundkörper der Stütze erreicht.

Die partielle Materialverformung weist vorzugsweise die Gestalt eines Ovals auf. Dies bietet die Möglichkeit, zur Realisierung der Geradführung die Platte mit einem entsprechenden Langloch zu versehen, dessen Länge allerdings größer als die Länge der Materialverformung ist, und in das die Materialverformung im Bereich der Abstützung nahezu ohne seitliches Spiel hineinragt.

Die Herstellung der Materialverformung erfolgt vorzugsweise durch partielles Prägen des Blechs und vorzugsweise Stahlblechs, aus dem der Grundkörper der Stütze besteht.

Dabei hat sich eine leicht modifizierte Gestaltung des Ovals als vorteilhaft herausgestellt, bei der das Oval im Sinne einer Knochenform variiert ist. Bei dieser Gestaltung sind die beiden Längsabschnitte des Ovals zueinander hin eingeschnürt und/oder die Verformungstiefe ist im Bereich der Endbögen des Ovals größer, als im Bereich der Längsabschnitte des Ovals. Dieses Abweichen von der Ovalform bewirkt eine definiertere Seitenabstützung der Platte. Je nach Richtung der Krafteinleitung an der Platte legt sich deren Langloch an nur zwei der vier durch die Einschnürung verbleibenden Abstützpunkte an. Dadurch wird die Freigängigkeit der Platte sichergestellt bzw. deren Klemmen vermieden.

In einer Ausgestaltung der Platte wird vorgeschlagen, dass die beiden darin ausgebildeten Langlöcher nebeneinander und aufeinander schräg zulaufend ausgebildet sind.

Mit einer weiteren Ausgestaltung wird vorgeschlagen, dass sich die Platte mit ihrer Innenseite unmittelbar auf der Außenseite der jeweiligen Seitenwand abstützt.

Weitere Einzelheiten und Vorteile ergeben sich aus der nachfolgenden Beschreibung, in der auf die zugehörigen Zeichnungen Bezug genommen wird. Darin zeigen:
- Fig. 1: in perspektivischer Darstellung eine Stütze und ein Achslenker einer luftgefederten Fahrzeugachse zum Einsatz in einem Nutzfahrzeuganhänger;
- Fig. 2: in perspektivischer Darstellung ausschließlich den einstückigen Grundkörper der Stütze;
- Fig. 3: in perspektivischer Darstellung die Stütze einschließlich Elementen zur Justage des Achslenkers und
- Fig. 4: einen vergrößerten Teilschnitt durch die Seitenwand des Stützengrundkörpers entlang der Schnittlinie IV - IV in Fig. 2.

Unter dem Fahrzeugrahmen eines Lkw-Anhängers oder -Aufliegers sind links und rechts jeweils Stützen 2 befestigt, vorzugsweise durch Verschweißen ihres oberen Randes 4 mit der Unterseite der Längsträger des Fahrzeugrahmens. In jeder Stütze 2 ist, schwenkbar um jeweils einen Bolzen 6, ein Achslenker 5 für die Fahrzeugachse schwenkbar gelagert.

Jeder Achslenker ist als ein Gießteil aus Stahlguss oder Leichtmetallguss ausgebildet. Das vordere Ende jedes Achslenkers 5 ist als Auge gestaltet, in dem eine Gummibuchse oder eine Gummi-Stahl-Buchse sitzt. Durch diese sowie durch die Seitenwände 7a, 7b der Stütze 2 hindurch erstreckt sich der Bolzen 6. An den rückwärtigen Enden der Achslenker 5 sind jeweils, was die Zeichnung nicht zeigt, Luftfederbälge einer in üblicher Weise gestalteten Luftfederung befestigt. Üblicherweise stützen sich derartige Luftfederbälge von unten gegen den Fahrzeugrahmen ab.

Jeder Achslenker 5 ist in einer Achsaufnahme 11 mit dem Achskörper der Fahrzeugachse verbunden. Der Achskörper, vorzugsweise ein Achsrohr, ist von der linken bis zur rechten Fahrzeugseite durchgehend gestaltet und trägt an seinen beiden Enden die Radlagerungen der Fahrzeugräder.

Zwischen dem Achslenker 5 und der Stütze 2 befindet sich ein Stoßdämpfer, wozu jede Stütze mit einem Anlenkbolzen 12 für den Stoßdämpfer versehen ist.

Zur Einstellung der Spur und des Vorlaufs der Fahrzeugachse sind die Stützen 2 mit Justiervorrichtungen 20 versehen, deren Aufbau im Folgenden erläutert wird.

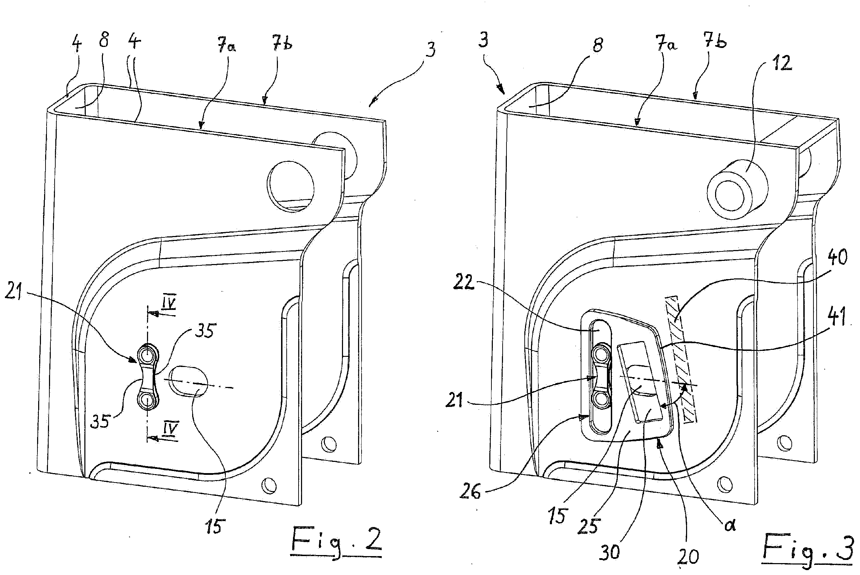

Der in Fig. 2 dargestellte, im Querschnitt U-förmig gestaltete Grundkörper 3 der Stütze setzt sich aus den beiden zueinander im Wesentlichen parallelen Seitenwänden 7a, 7b und einer Querwand oder Stirnwand 8 zusammen. Die Seitenwände 7a, 7b sind mit in Fahrtrichtung und im Wesentlichen horizontal verlaufenden Langlöchern 15 versehen, die daher eine in etwa waagerechte Kulisse für den Bolzen 6 bilden. Der Bolzen 6 kann in Bezug auf den Stützengrundkörper 3 daher nur eine horizontale, und keine nennenswerte vertikale Bewegung ausführen, wozu die vertikal gemessene Breite des in der Seitenwand 7a, 7b ausgebildeten Langlochs 15 im Wesentlichen gleich dem Durchtrittsdurchmesser des Bolzens 6 ist.

Die Stirnwand 8 des Grundkörpers 3 weist nach vorne, also in Fahrtrichtung. Der Grundkörper ist, solange er nicht mit dem Chassis verschweißt ist, nach hinten, nach unten und nach oben offen. In fertigungstechnisch vorteilhafter Ausgestaltung ist der Grundkörper 3 einteilig, indem alle seine Wände, also die Seitenwände 7a, 7b und die vordere Stirnwand 8, Abschnitte ein- und desselben Blechstreifens sind. Dieser Blechstreifen aus z.B. Stahlblech wird in einem Kaltumformprozess, z.B. in einem Stanz- oder Stanz-Biege-Prozess zu dem in Fig. 2 wiedergegebenen Blechformteil umgestaltet. Dies geschieht in einem einzigen Fertigungsschritt.

An beiden Seitenwänden 7a, 7b befindet sich jeweils eine Justiervorrichtung 20 zur stufenlosen horizontalen Lagereinstellung des Bolzens 6. Zu diesem Zweck und als Bestandteil der Justiervorrichtung 20 ist jede Seitenwand 7a, 7b außen mit einer im Rahmen des Umformprozesses aus dem Blechmaterial heraus gebildeten Materialverformung 21 versehen. Die Materialverformung 21 ist, wie Fig. 2 erkennen lässt, von länglicher, im Wesentlichen knochenförmiger Gestalt, erstreckt sich im Wesentlichen vertikal, und greift in ein Langloch 22 ein, welches sich in einer Platte 25 befindet. Zwischen den beiden Endabschnitten der Materialverformung 21 und den Längsrändern des Langlochs 22 besteht kein nennenswertes seitliches Spiel, jedoch ist das Langloch 22 deutlich länger als die Materialverformung 21. Erreicht wird hierdurch eine Geradführung 26 bestehend aus einem führenden, also ortsfesten und einem geführten, also beweglichen Element. Das führende Element 21 ist die in das Langloch 22 hineinragende Materialverformung, und das geführte Element ist die Platte 25 mit dem Langloch 22. Durch die größere Länge des geführten Elements 22 im Vergleich zum führenden Element 21 lässt sich die Platte 25 längs der Geradführung 26 stufenlos in verschiedene Höhenpositionen bewegen, wobei diese Bewegungsmöglichkeit im Wesentlichen quer zur Hauptausdehnung des Achslenkers 5 ist.

Die Platte 25 der Justiervorrichtung 20 ist als ein beidseitig flaches Blechstück gestaltet und daher sowohl links wie rechts an der Stütze verwendbar. Die Platte 25 ist ferner mit einem weiteren Langloch 30 versehen. Dieses Langloch 30 kreuzt das unmittelbar dahinter als Öffnung in der Seitenwand 7a bzw. 7b ausgebildete Langloch 15, wobei das Langloch 30 zu dem Langloch 15 einen in Fig. 3 eingetragenen Winkel α aufweist, der 60° bis 85° beträgt. Die Breite des Langlochs 30 entspricht im Wesentlichen dem Durchmesser des Bolzens 6, der sowohl durch dieses Langloch 30, wie auch durch das Langloch 15 hindurchführt.

Zugleich verläuft das Langloch 30 schräg zu dem anderen Langloch 22 der Platte 25, wobei beide Langlöcher 30, 22, um die Größe der Platte 25 gering zu halten, nebeneinander und aufeinander schräg zulaufend in der Platte ausgebildet sind.

Der rückwärtige Rand 41 der Platte 25 verläuft in etwa parallel zu dem Langloch 30, und damit ebenfalls schräg unter dem Winkel α zur Vertikalen. Durch diesen Schrägverlauf des rückwärtigen Randes 41 erstreckt sich dieser zugleich parallel zu einem Anlagebereich 40. Dieser Anlagebereich 40 ist gemäß Fig. 3 eine schmale Fläche, an der ein die Stütze 2 zur Seite hin versteifendes Knotenblech angeschweißt ist.

Die Gestaltung und Ausrichtung der Einzelteile der Justiervorrichtung 20 ist also dergestalt, dass eine Höhenänderung der Platte 25 längs der Geradführung 26 zu einer Verlagerung des Bolzens 6 in horizontaler Richtung führt, und sich so die Position des Bolzens 6 und damit der Schwenkort des jeweiligen Achslenkers 5 einstellen lässt.

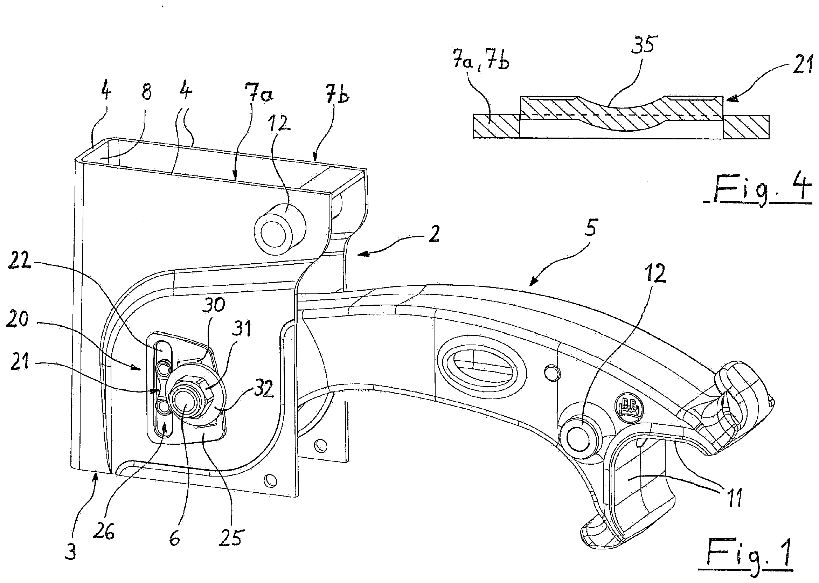

Die Justiervorrichtung 20 wird durch abschließendes Anziehen des Bolzens 6 verspannt. Hierzu ist der Bolzen 6 an seinem in Fig. 1 nicht erkennbaren einen Ende mit einem Bolzenkopf, und an seinem anderen Ende mit einem Gewinde versehen, auf das eine Mutter 31 aufschraubbar ist, unter der sich, gegen die Platte 25 anliegend, noch eine Unterlegscheibe 32 befindet.

Unmittelbar unterhalb des Bolzenkopfes kann der Bolzen 6 mit einem Zwei- oder Vierkant versehen sein, der formschlüssig in das Langloch 30 der Platte 25 eingreift. Durch eine solche Maßnahme ist der Bolzen 6 in montiertem Zustand gegen Verdrehen um seine Längsachse gesichert.

Fig. 4 zeigt einen Schnitt durch die das führende Element der Geradführung bereitstellende Materialverformung 21. In Verbindung mit z. B. Fig. 1 ist erkennbar, dass die Materialverformung 21 die Grundform eines Ovals aufweist, jedoch dieses Oval ähnlich einem Knochen in seinem Mittelabschnitt eingeschnürt ist. Denn gemäß Fig. 1 sind die beiden Längsabschnitte 35 des Ovals zueinander hin eingeschnürt. Gemäß der Schnittdarstellung Fig. 4 ist, um der Prägung Festigkeit zu verleihen, die durch das Prägewerkzeug erzielte Verformungstiefe der Materialverformung 21 im Bereich der Längsabschnitte 35 des Ovals geringer, als im Bereich der Enden des Ovals. Überall jedoch ist die Verformungstiefe geringer oder höchstens gleich der Dicke der Platte 25.

Das Abweichen von der Ovalform bewirkt eine definiertere seitliche Abstützung der Platte 25. Je nach Richtung der Krafteinleitung an der Platte legt sich deren Langloch 22 an nur zwei der vier durch die Einschnürung verbleibenden Abstützpunkten der Materialverformung 21 an. Dadurch wird die Freigängigkeit der Platte 25 sichergestellt, bzw. deren Klemmen oder Verkanten vermieden.

Die Materialverformung 21 muss für eine sichere Aufnahme der Platte 25 eine Mindestprägetiefe aufweisen, so dass die sich abstützende Platte nicht über die Materialverformung überrutschen kann. Um diese Tiefe zu erreichen, ohne ein Herausbrechen der Materialverformung 21 aus der Seitenwand der Stütze zu riskieren, ist der eingeschnürte Bereich weniger stark ausgeprägt. Somit werden einerseits die Endbereiche durch den mittleren Bereich der Längsabschnitte 35 sicher gegen Herausbrechen gehalten, und es weisen die Endbereiche andererseits die notwendige Tiefe auf.

Außer durch Prägen, wie dies in Fig. 4 illustriert ist, lässt sich die Materialverformung 21 auch durch andere Umfomtechniken herstellen, z.B. mittels Durchstellen, also durch Umbördeln unter Öffnen des Materials. Auch durch Tiefziehen ist die Verformung 21 herstellbar.

Vorstehend ist die Erfindung anhand einer luftgefederten Fahrzeugachse eines Nutzfahrzeuganhängers beschrieben. Sie lässt sich in gleicher Weise auch bei anderen Achsbauarten einsetzen, z. B. bei einer Fahrzeugachse, welche durch Blattfedern oder Blattfederpakete gegenüber dem Fahrzeugrahmen abgestützt ist.

### Bezugszeichenliste

- 2: Stütze
- 3: Grundkörper, Stütze
- 4: Rand
- 5: Achslenker
- 6: Bolzen
- 7a: Seitenwand
- 7b: Seitenwand
- 8: Querwand, Stirnwand
- 11: Achsaufnahme
- 12: Anlenkbolzen für Stoßdämpfer
- 15: Langloch
- 20: Justiereinrichtung
- 21: führendes Element, Materialverformung
- 22: Langloch
- 25: Platte
- 26: Geradführung
- 30: Langloch
- 31: Mutter
- 32: Unterlegscheibe
- 35: Längsabschnitt
- 40: Anlagebereich
- 41: Rand

- α: Winkel

## Patentansprüche

1. Stütze zur schwenkbaren Lagerung des Achslenkers einer Fahrzeugachse, mit einem Grundkörper (3) aus zwei über eine Stirnwand (8) miteinander verbundenen Seitenwänden (7a, 7b), die jeweils mit einer Öffnung (15) für einen die Schwenkachse bildenden, quer durch die Seitenwände (7a, 7b) und den dazwischen einsetzbaren Achslenker hindurchführenden Bolzen (6) versehen sind, und mit an beiden Seitenwänden (7a, 7b) angeordneten Justiervorrichtungen (20) zur stufenlosen Einstellung der Bolzenposition, wobei jede Justiervorrichtung (20) eine Geradführung (26) aufweist, deren führendes Element starr an der Seitenwand (7a, 7b) angeordnet ist und deren daran geführtes Element eine Platte (25) ist, die mit einem schräg zu der Geradführung verlaufenden Langloch (30) versehen ist, durch das der Bolzen (6) quer hindurchführt, **dadurch gekennzeichnet, dass** das führende Element der Geradführung einstückig an der jeweiligen Seitenwand (7a, 7b) angeformt ist, indem der Grundkörper (3) als Blechformteil ausgebildet ist und das führende Element der Geradführung in einer partiellen Materialverformung (21) des Blechmaterials der jeweiligen Seitenwand (7a, 7b) besteht.

2. Stütze nach Anspruch 1, **dadurch gekennzeichnet, dass** die partielle Materialverformung (21) nach außen aus der jeweiligen Seitenwand (7a, 7b) hervorsteht.

3. Stütze nach einem der Ansprüche 1 oder 2, **dadurch gekennzeichnet, dass** die Materialverformung (21) die Grundform eines Ovals aufweist.

4. Stütze nach Anspruch 3, **dadurch gekennzeichnet, dass** die beiden Längsabschnitte (35) des Ovals zueinander hin eingeschnürt sind.

5. Stütze nach Anspruch 3, **dadurch gekennzeichnet, dass** die Verformungstiefe der Materialverformung (21) im Bereich der Endbögen des Ovals größer ist als im Bereich der Längsabschnitte (35) des Ovals.

6. Stütze nach einem der vorangehenden Ansprüche, **dadurch gekennzeichnet, dass** zur Geradführung der Platte (25) diese mit einem zweiten Langloch (22) versehen ist, dessen Länge größer als die Länge der Materialverformung (21) ist und in das die Materialverformung (21) nahezu ohne seitliches Spiel hineinragt.

7. Stütze nach Anspruch 6, **dadurch gekennzeichnet, dass** die beiden Langlöcher (22, 30) nebeneinander und aufeinander schräg zulaufend in der Platte (25) ausgebildet sind.

8. Stütze nach einem der vorangehenden Ansprüche, **dadurch gekennzeichnet, dass** sich die Platte (25) mit ihrer Innenseite unmittelbar auf der Außenseite der jeweiligen Seitenwand (7a, 7b) abstützt.

## Claims

1. Support for the pivotable mounting of the axle link of a vehicle axle, with a basic body (3) consisting of two side walls (7a, 7b) which are connected to each other via an end wall (8) and are each provided with an opening (15) for a bolt (6) which forms the pivot axis and passes transversely through the side walls (7a, 7b) and the axle link, which is insertable in between, and with adjustment devices (20), which are arranged on the two side walls (7a, 7b), for the infinitely variable adjustment of the bolt position, wherein each adjustment device (20) has a rectilinear guide (26), the guiding element of which is arranged rigidly on the side wall (7a, 7b), and the element which guided thereon is a plate (25) which is provided with an elongated hole (30) which runs obliquely with respect to the rectilinear guide and through which the bolt (6) passes transversely, **characterized in that** the guiding element of the rectilinear guide is formed integrally on the respective side wall (7a, 7b) by the basic body (3) being designed as a shaped sheet-metal part and the guiding element of the rectilinear guide consisting in a partial material deformation (21) of the sheet-metal material of the respective side wall (7a, 7b).

2. Support according to Claim 1, **characterized in that** the partial material deformation (21) protrudes outwards from the respective side wall (7a, 7b).

3. Support according to either of Claims 1 and 2, **characterized in that** the material deformation (21) has the basic shape of an oval.

4. Support according to Claim 3, **characterized in that** the two longitudinal portions (35) of the oval are constricted in the direction towards each other.

5. Support according to Claim 3, **characterized in that** the deformation depth of the material deformation (21) is greater in the region of the end curves of the oval than in the region of the longitudinal portions (35) of the oval.

6. Support according to one of the preceding claims, **characterized in that**, for the rectilinear guidance of the plate (25), the latter is provided with a second elongated hole (22), the length of which is greater than the length of the material deformation (21) and into which the material deformation (21) projects virtually without lateral play.

7. Support according to Claim 6, **characterized in that** the two elongated holes (22, 30) are formed next to each other and in a manner converging obliquely towards each other in the plate (25).

8. Support according to one of the preceding claims, **characterized in that** the plate (25) is supported with its inner side directly on the outer side of the respective side wall (7a, 7b).

## Revendications

1. Support pour le montage oscillant du guide d'essieu d'un essieu de véhicule, avec un corps de base (3) composé de deux parois latérales (7a, 7b) reliées l'une à l'autre par une paroi frontale (8), qui sont respectivement dotées d'une ouverture (15) pour un pivot (6) formant l'axe d'oscillation et à mener à travers les parois latérales (7a, 7b) et le guide d'essieu insérable entre celles-ci, et avec des dispositif d'ajustage (20) disposés sur les deux parois latérales (7a, 7b) pour le réglage continu de la position du pivot, dans lequel chaque dispositif d'ajustage (20) présente un guidage rectiligne (26), dont l'élément de guidage est disposé de façon rigide sur la paroi latérale (7a, 7b) et dont l'élément guidé sur celui-ci est une plaque (25), qui est dotée d'un trou oblong (30) s'étendant en oblique par rapport au guidage rectiligne, et que le pivot (6) traverse transversalement, **caractérisé en ce que** l'élément de guidage du guidage rectiligne est formé d'une seule pièce sur la paroi latérale respective (7a, 7b), du fait que le corps de base (3) est réalisé sous la forme d'une pièce de forme en tôle et que l'élément de guidage du guidage rectiligne consiste en une déformation de matière partielle (21) du matériau en tôle de la paroi latérale respective (7a, 7b).

2. Support selon la revendication 1, **caractérisé en ce que** la déformation de matière partielle (21) est saillante vers l'extérieur sur la paroi latérale respective (7a, 7b).

3. Support selon une des revendications 1 ou 2, **caractérisé en ce que** la déformation de matière (21) présente la forme de base d'un ovale.

4. Support selon la revendication 3, **caractérisé en ce que** les deux parties longitudinales (35) de l'ovale sont cintrées l'une vers l'autre.

5. Support selon la revendication 3, **caractérisé en ce que** la profondeur de déformation de la déformation de matière (21) dans la région des arcs d'extrémité de l'ovale est plus grande que dans la région des parties longitudinales (35) de l'ovale.

6. Support selon l'une quelconque des revendications précédentes, **caractérisé en ce que** pour le guidage rectiligne de la plaque (25) celle-ci est dotée d'un second trou oblong (22), dont la longueur est plus grande que la longueur de la déformation de matière (21) et dans lequel la déformation de matière (21) pénètre pratiquement sans jeu latéral.

7. Support selon la revendication 6, **caractérisé en ce que** les deux trous oblongs (22, 30) sont formés l'un à côté de l'autre et s'étendent en oblique l'un par rapport à l'autre dans la plaque (25).

8. Support selon l'une quelconque des revendications précédentes, **caractérisé en ce que** la plaque (25) s'appuie avec son côté intérieur directement sur le côté extérieur de la paroi latérale respective (7a, 7b).
